# EUROPEAN PATENT APPLICATION

(11) **EP 2 019 540 A2**
(43) Date of publication of application: **28.01.2009**
(21) Application number: 08159389.9
(22) Date of filing: 01.07.2008
(51) Int. Cl.: H04M 1/725

(54) **Mobile terminal and SIM indicative information display method thereof**

(30) Priority: 25.07.2007 KR 20070074762
(71) Applicant: Samsung Electronics Co., Ltd., Suwon-si, Gyeonggi-Do (KR)
(72) Inventor: Kim, Hee Woon, Gyeonggi-do (KR); Hwang, Jae Joon, Gyeonggi-do (KR); Lee, Dong Uk, Gyeonggi-do (KR); Lee, So Young, Gyeonggi-do (KR)
(74) Representative: Harrison Goddard Foote

(57) **Abstract**

A subscriber identity module (SIM) indicative information display method of the present invention includes receiving SIM indicative information one of a SIM card detected in one of the SIM card slots, registering the SIM indicative information with a SIM identity of the SIM card, detecting a SIM indicative information request requesting the SIM indicative information of the SIM card, and displaying the SIM indicative information mapped to the SIM identity of the SIM card when a SIM indicative information request is detected.

## Description

### CROSS REFERENCE TO RELATED APPLICATION

This application claims priority from and the benefit of Korean Patent Application No. 10-2007-0074762, filed on July 25, 2007, which is hereby incorporated by reference for all purposes as if fully set forth herein.

### BACKGROUND OF THE INVENTION

FIELD OF THE INVENTION

The present invention relates to a mobile terminal and, in particular, to a SIM-indicative information display method and mechanism for a mobile terminal that may be capable of displaying information of distinctive subscriber identity modules indicatively.

DISCUSSION OF THE BACKGROUND

A Subscriber Identity Module (SIM) is an integrated circuit card for identifying a subscriber in a Global System for Mobile Communication (GSM) or Wideband Code Division Multiple Access (WCDMA) mobile communication system.

Typically, a mobile terminal operating with the SIM card is provided with a SIM card slot. With the development and deployment of various mobile communication systems, dual-SIM mobile terminals designed to accommodate two SIM cards have been developed. The dual-SIM mobile terminal allows the use of two services by attaching two SIM cards without the need to carry two mobile terminals or to change the SIM cards alternately.

However, the conventional dual-SIM mobile terminal has a drawback in that a user may be unable to use the two attached SIM cards distinctively. Also, the conventional dual-SIM mobile terminal distinguishes SIM cards only with their physical locations like SIM1 in slot 1 and SIM2 in slot 2. Therefore, unless the user checks the physical locations of the two SIM cards, the user may need to take cumbersome terminal manipulation steps in order to use an intended SIM card. Accordingly, the user may not know which SIM card is used when receiving an incoming call or transmitting an outgoing call. Although the physical locations of the SIM cards may be known during installation, the user is likely to forget the positions of the SIM cards as time goes on. Thus, there has been a need to develop a SIM indication method to allow the user to selectively use multiple SIM cards.

### SUMMARY OF THE INVENTION

The present invention has been made in an effort to solve the above problems, and the present invention provides a SIM-indicative information display method and mechanism for a mobile terminal that is capable of displaying indicative information of multiple SIM cards distinctively.

The present invention also provides a SIM-indicative information display method and mechanism for a mobile terminal that enables a user to register multiple SIM cards with distinctive SIM-indicative information, which may improve the usability of the mobile terminal.

Additional features of the invention will be set forth in the description which follows, and in part will be apparent from the description, or may be learned by practice of the invention.

The present invention discloses a subscriber identity module (SIM) indicative information display method for a mobile terminal having multiple SIM card slots. The method includes receiving SIM indicative information of a SIM card detected in one of the SIM card slots, detecting a SIM indicative information request requesting SIM indicative information of the SIM card, and displaying the SIM indicative information mapped to a SIM identity of the SIM card when the SIM indicative information request is detected.

The present invention also discloses a mobile terminal including a plurality of subscriber identity module (SIM) card slots, an input unit to input SIM indicative information of a SIM card installed in a SIM card slot, a storage unit to store mapping information of the SIM indicative information and SIM identity stored in the SIM card, a display unit to display the SIM indicative information mapped to the SIM identity of the SIM card, and a control unit to control the storage unit to store the SIM indicative information and mapping information between the SIM indicative information and the SIM identity and to control the display unit to display the SIM indicative information mapped to the SIM identity of the SIM card in response to a SIM indicative information request.

The present invention also discloses a subscriber identity module (SIM) indicative information display method for a mobile terminal having multiple SIM card slots. The method includes receiving SIM indicative information of a first SIM card detected in a first SIM card slot, receiving SIM indicative information of a second SIM card detected in a second SIM card slot, detecting a SIM indicative information request requesting SIM indicative information of the first SIM card and the second SIM card, and displaying the SIM indicative information of the first SIM card mapped to a SIM identity of the first SIM card and displaying the SIM indicative information of the second SIM card mapped to a SIM identity of the second SIM card when the SIM indicative information request is detected.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram showing a configuration of a mobile terminal according to an exemplary embodiment of the present invention.

FIG. 2A and FIG. 2B are flowcharts showing a SIM indicative information display method according to an exemplary embodiment of the present invention.

FIG. 3 is a flowchart showing a SIM indicative information modification procedure of the SIM indicative information display method of FIG. 2A and FIG. 2B.

FIG. 4 is a diagram showing screen images of steps of the SIM indicative information registration procedure of the SIM indicative information display method of FIG. 2A and FIG. 2B.

FIG. 5 is a diagram showing a standby screen of a mobile terminal operating with the SIM indicative information display method of FIG. 2A and FIG. 2B.

FIG. 6 is a diagram showing a call history screen of the mobile terminal according to an exemplary embodiment of the present invention.

FIG. 7 is a diagram showing a recent list screen of the mobile terminal according to an exemplary embodiment of the present invention.

FIG. 8 is a diagram showing steps of an incoming call alert procedure of the mobile terminal according to an exemplary embodiment of the present invention.

FIG. 9 is a diagram showing a SIM card list screen of the mobile terminal according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. Like reference numerals in the drawings denote like elements.

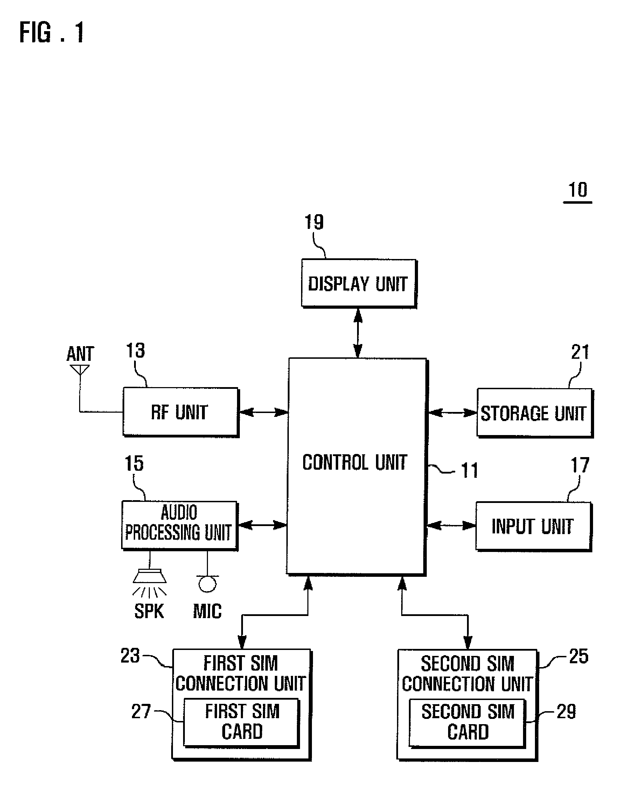

FIG. 1 is a block diagram showing a configuration of a mobile terminal according to an exemplary embodiment of the present invention.

Referring to FIG. 1, the mobile terminal 10 includes a control unit 11, a radio frequency (RF) unit 13, an audio processing unit 15, an input unit 17, a display unit 19, a storage unit 21, first and second SIM connection units 23 and 25, and first and second SIM cards 27 and 29 connected to the respective first and second SIM connection units 23 and 25.

The RF unit 13 converts the radio signal received through an antenna (ANT) into baseband signal and converts the baseband signal output by the control unit 11 into radio signal. The RF unit 13 includes an RF transmitter to up-convert and amplify the transmission signal and an RF receiver to low noise amplify and downconvert the received signal. Using the RF unit 13, the mobile terminal 10 may support various wireless communication services such as voice communication, video communication, Short Message Service (SMS), multimedia service, data communication, and the like.

The audio processing unit 15 processes the audio data to output the processed audio data through a speaker in the form of audible sound wave and processes the audio signal input through a microphone (MIC) to output the processed audio signal to the control unit 11. The audio processing unit 15 also processes ring tones and audio files to be output in the form of audible sound waves.

The input unit 17 generates command signals to execute operations of the mobile terminal 10. The input unit 17 is provided with a plurality of alphanumeric keys for inputting alphanumeric data and a plurality of function keys for configuring and executing various functions of the mobile terminal 10. The input unit 17 may be a keypad, a touchscreen, a touchpad, or the like. Particularly in this exemplary embodiment, the input unit 17 is provided with a SIM card switch key to switch between the first and second SIM cards 27 and 29.

The display unit 19 displays various menu screen and video data and radio communication-related information and general information of the mobile terminal 10. The radio communication-related information includes communication status information, incoming and outgoing call information, phonebook data, and incoming call alert information. The general information includes manipulation and operation status of mobile terminal and application program execution status. The display unit 19 may be a Liquid Crystal Display (LCD), Organic Light Emitting Diode (OLED), Plasma Display Panel (PDP), or the like.

The storage unit 21 stores various application programs associated with operations of the mobile terminal 10, application data generated while executing the application programs, and user data input by the user. Particularly in this exemplary embodiment, the storage unit 21 stores the SIM card information including a SIM card name, an icon representing the SIM card, and map information on the International Mobile Subscriber Identity (IMSI).

The SIM connection units 23 and 25 are sockets to receive SIM cards 27 and 29 and act as interfaces between the SIM cards 27 and 29 and the control unit 11. In this exemplary embodiment, the mobile terminal 10 includes first and second SIM connection unit 23 and 25.

The SIM cards 27 and 29 are detachably attached to the SIM connection units 27 and 29. The SIM cards 27 and 29 store the IMSI codes required for call processing between the mobile terminal 10 and a communication networks. The IMSI consists of Mobile Country Code (MCC), Mobile Network Code (MNC), and Mobile Subscriber Identity Number (MSIN). The SIM card 27 may contain data, such as phonebook and messages.

The control unit 11 controls general operations of the mobile terminal 10. The mobile communication functions, such as voice and video communications and short message communication, are performed under the control of the control unit 11. Also, the mobile terminal 10 performs communication related functions, such as a phonebook function, an incoming call alert function and other optional functions such as memo, scheduler, and alarm functions, under the control of the control unit 11.

Particularly in this exemplary embodiment, the control unit 11 authenticates the SIM card using the IMSI information. The control unit 11 also maps SIM indicative information input through the input unit 17 to the IMSI information and stores the mapping information within the storage unit 21. The control unit 11 monitors whether a SIM indicative information request is input through the input unit 17 and controls the display unit to display the SIM indicative information mapped to the IMSI information in response to a SIM indicative information request. The control unit 11 may include various microcomputers (MICOM), such as a Mobile Station Modem (MSM) of Qualcomm, which is capable of controlling the mobile terminal 10.

Although this exemplary embodiment is described with an exemplary mobile terminal, the present invention is not limited thereto. For example, the SIM indicative information display method of the present invention can be applied to various mobile devices operating with SIM cards, such as Personal Digital Assistants (PDAs), Smartphones, and International Mobile Telecommunication 2000 (IMT-2000) terminals, such as a Universal Mobile Communications System (UMTS) terminal.

A SIM indicative information display method is described in association with the above structured mobile terminal hereinafter. In the following description, the SIM indicative information display method is performed in response to a SIM indicative information request detected under the assumption that the mobile terminal powers on and SIM indicative information is registered during the boot-up process. However, exemplary embodiments of the present invention are not limited thereto, but may be modified and changed to be applicable in various situations.

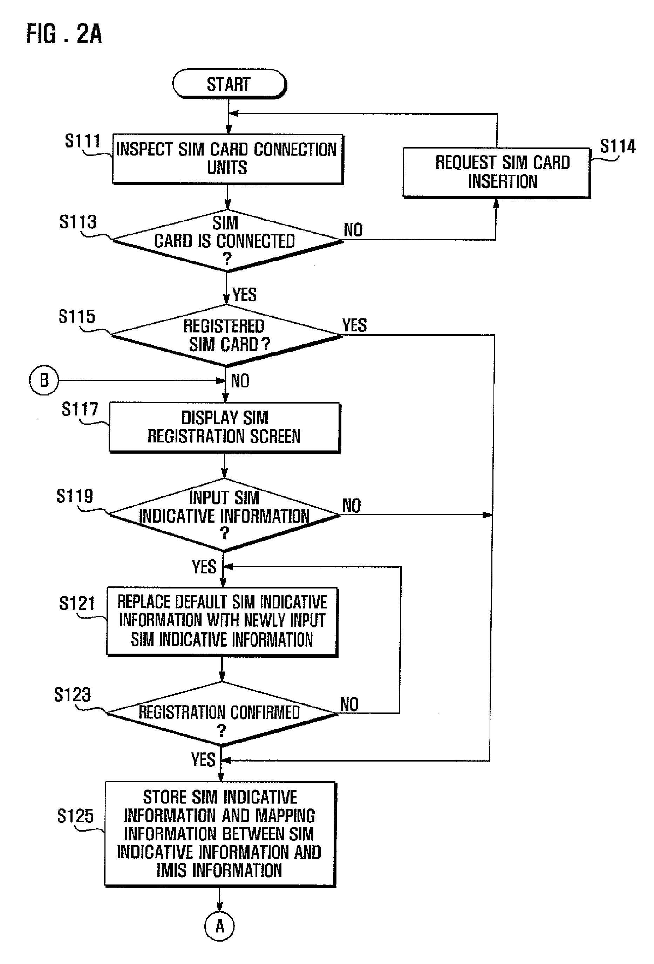

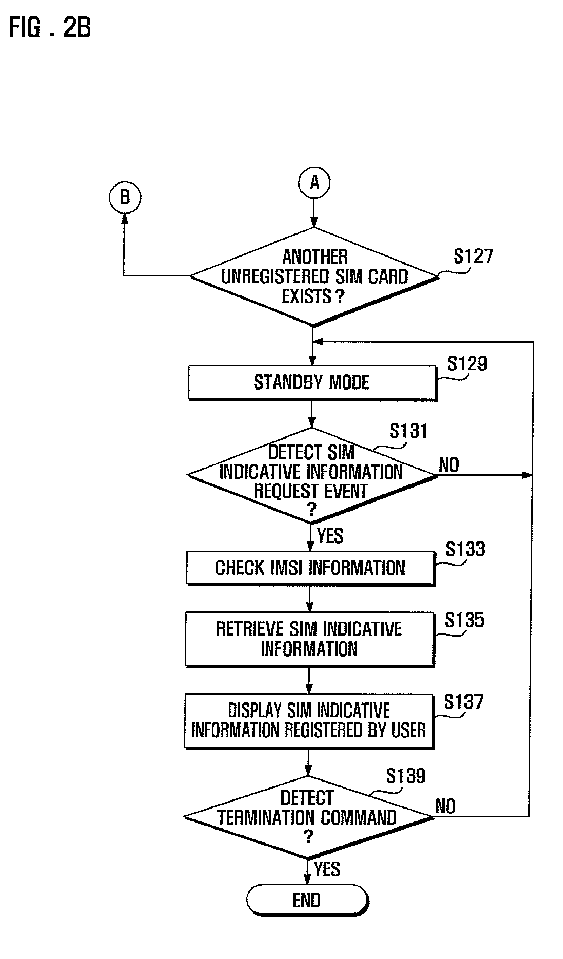

FIG. 2A and 2B are flowcharts showing a SIM indicative information display method according to an exemplary embodiment of the present invention.

Referring to FIG. 1, FIG. 2A, and FIG. 2B, if the mobile terminal 10 powers on, the control unit 11 of the mobile terminal 10 inspects the SIM card connection units 23 and 25 (S111) and determines whether the first and second SIM cards are connected to the respective SIM connection units 23 and 25 (S113). If no SIM card is detected in either the first SIM connection unit 23 or the second SIM connection unit 25, the control unit 11 causes an alert screen, which asks for at least one SIM card be inserted, to be displayed (S114).

If at least one SIM card 27 and/or 29 is detected in the first or second SIM connection unit 23 and 25 at step S113, the control unit 11 determines whether the SIM card is a registered SIM card (S115). The control unit 11 reads the IMSI information from the SIM card and determines whether the SIM card is registered on the basis of whether the SIM indicative information mapped to the IMSI information is stored in the storage unit 21.

If it is determined that the detected SIM card is not registered with the mobile terminal 10, the control unit 11 causes a SIM registration screen to be displayed on the display unit 19 (S117). The SIM registration screen is provided with SIM card title windows together with a plurality of icons. The SIM registration screen may present the physical location names of the SIM connection units 23 and 25 (for example, SIM1 and SIM2) with corresponding icons. One of the connection units 23 and 25 may be provided with default SIM indicative information. The title of the SIM card may be limited in length in consideration of the tap title to be described below.

After displaying the SIM registration screen, the control unit 11 determines whether SIM indicative information is input by the user (S119). If SIM indicative information is input through the input unit 17, the control unit replaces the default SIM indicative information with the newly input SIM indicative information (S121).

Next, the control unit 11 determines whether a registration confirmation command is input through the input unit 17 (S123). If a registration confirmation command is input, the control unit 11 maps the SIM indicative information input through the input unit 17 to the IMSI information of the SIM card 27 (or 29) and then stores the mapping information in the storage unit 21 or the SIM card 27 (S125). Consequently, the SIM card is registered with its SIM indicative information. If no SIM indicative information is input at step S119, the control unit 11 stores the default SIM indicative information and its icon at step S125.

After completing registration of a SIM card, the control unit 11 determines whether another unregistered SIM card is detected (S127). If an unregistered SIM card is detected, the control unit 11 repeats step S117 to allow registration of the unregistered SIM card. If no unregistered SIM card is detected, the control unit 11 sets the mobile terminal 10 to enter an idle mode (S129).

In the idle mode, the control unit 11 detects whether a SIM indicative information request is input (S131). If a SIM indicative information request is detected, the control unit 11 checks the IMSI information of the SIM cards 27 and 29 (S133) and retrieves the SIM indicative information mapped to the IMSI information (S135). Next, the control unit 11 shows the retrieved SIM indicative information registered by the user on the display unit 19 (S137). In this manner, the SIM indicative information display method allows the user to recognize the information on the SIM cards 27 and 29 distinctively so as to use the SIM cards selectively.

While the SIM indicative information is displayed, the control unit 11 determines whether a termination command is input (S139). If a termination command is detected, the control unit stops displaying the SIM indicative information.

The SIM indicative information display method according to this exemplary embodiment may allow the user to efficiently manage the SIM indicative information by providing a SIM card list of SIM indicative information registered by the user with editing menus such as "add", "delete", and "modify" menus. How to modify the SIM indicative information is described hereinafter.

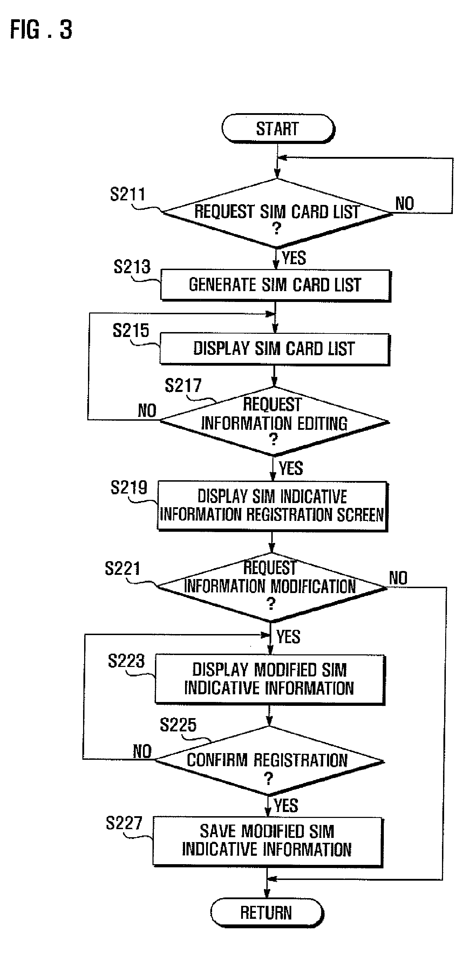

FIG. 3 is a flowchart showing a SIM indicative information modification procedure of the SIM indicative information display method of FIG. 2A and FIG. 2B.

Referring to FIG. 1, FIG. 2A, FIG. 2B, and FIG. 3, the control unit 11 determines whether a SIM card list request command is input through the input unit 17 (S211). If a SIM card list request command is input, the control unit 11 generates a SIM card list on the basis of the mapping information of the IMSI information and SIM indicative information (S213) and displays the SIM card list (S215) on the display unit 19. The SIM card list is stored in the storage unit 21 and updated when SIM indicative information is registered. The control unit 11 causes the SIM card list to be displayed with the SIM card names and corresponding icons so the user can determine which SIM cards 27 and 29 are registered with the mobile terminal 10.

While the SIM card list is displayed, the control unit 11 determines whether an edit request command is input (S217). If an edit request command is input, the control unit 11 causes the SIM indicative information registration screen to be displayed on the display unit 19 (S219). The SIM indicative information registration screen is composed of the registered SIM indicative information so the user can check and modify the SIM indicative information.

Next, the control unit 11 determines whether an information modification request command is input (S221). If an information modification request command is input, the control unit 11 displays the modified SIM indicative information on the SIM indicative information registration screen (S223). Next, the control unit 11 determines whether a registration confirmation command is input (S225). If a registration confirmation command is input, the control unit 11 saves the modified SIM indicative information (S227).

How the SIM indicative information is registered is described hereinafter with reference to screen images of the mobile terminal. In the following description, it is assumed that the SIM cards inserted in the first and second SIM connection units are not registered to the mobile terminal.

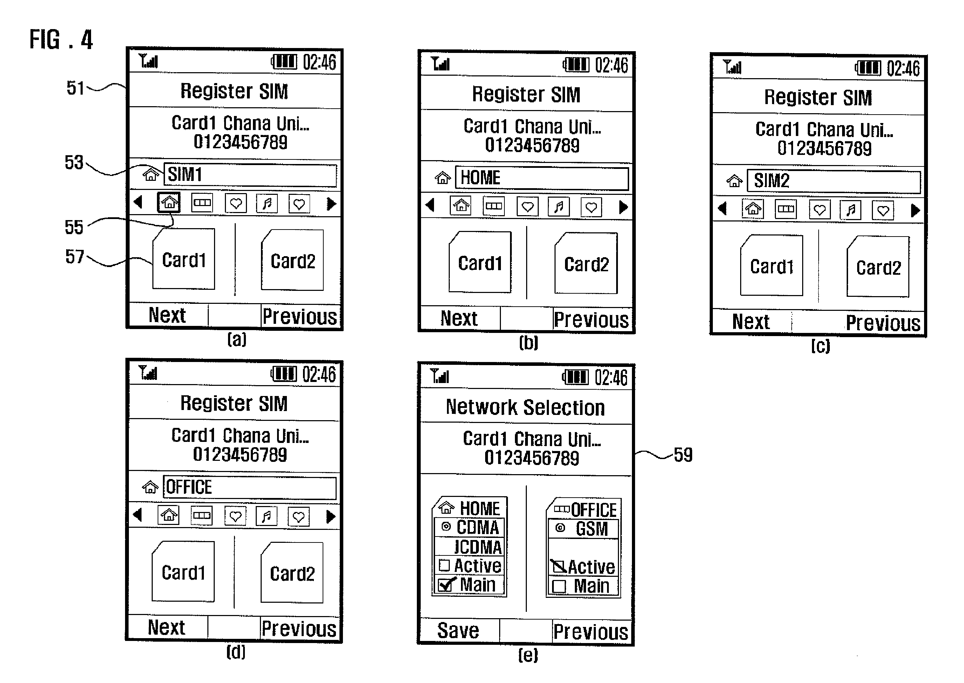

FIG. 4 is a diagram showing screen images of steps of the SIM indicative information registration procedure of the SIM indicative information display method of FIG. 2A and FIG. 2B.

Referring to FIG. 4, if it is determined that the SIM cards 27 and 29 connected to the first and second SIM card connection units 23 and 25 are unregistered SIM cards, the control unit 11 causes a SIM card registration screen 51 to be displayed on the display unit 19, as shown in the screen image (a) of FIG. 4. The SIM card registration screen 51 is provided with a text box 53, title icons to be assigned to the SIM cards below the text box 53, and SIM card status icons 57 showing the physical locations and status of the SIM cards. In the screen image (a), the first SIM card status icon is highlighted to indicate the selection of the first SIM card 27. The text box 53 shows the name of the first SIM connection unit 23 as SIM1. If a word is input through the input unit 17, i.e. a title "HOME" is input while the first SIM card 27 connected to the first SIM connection unit 23 is selected, the control unit 11 controls causes the title "HOME" to be displayed in the text box 53, as shown in the screen image (b) of FIG. 4.

Next, the control unit 11 navigates the cursor to an icon 55 to be assigned to the first SIM card in response to user manipulation. When an icon 55 is selected, the control unit 11 displays the selected icon 55 at the left side of text box 53. Because the first SIM card status icon is highlighted, the user may recognize that the first SIM card 27 is located in the first SIM connection unit 23.

After assigning the title and icon to the first SIM card 27, the user may press the "next" button provided at the bottom of the SIM card registration screen 51 to complete registration of the first SIM card 27.

After the first SIM card 27 is successfully registered, the control unit 11 causes the second SIM card status icon to be highlighted, as shown in the screen image (c) of FIG. 4. In this case, the text box 53 shows the name of the second SIM connection unit 25 as SIM2.

If a word "OFFICE" is input through the input unit 17 while the second SIM connection unit 25 is selected, the control unit 11 causes the title "OFFICE" to be displayed in the text box 53, as shown in the screen image (d) of FIG. 4. Next, the control unit 11 assigns an icon according to the user manipulation and displays the icon at the left side of the text box 53.

After assigning the title and icon to the second SIM card 29, the user may take a next step, such as pressing the "next" button provided at the bottom of the SIM card registration screen 51 to complete registration of the second SIM card 29. Once the registration of the first and second SIM cards 27 and 29 is completed, the control unit 11 cause a dual mode setting screen 59 to be displayed, as shown in the screen image (e) of FIG. 4. On the dual mode setting screen 59, the user may configure the dual mode setting of the mobile terminal 10. If both the first and second SIM cards 27 and 29 are previously registered, the control unit 11 may skip displaying the SIM card registration screen. The user may enable and disable either the first SIM card 27 or the second SIM card 29 and designate one of the two SIM cards as a primary SIM card and the other as a secondary SIM card. The mobile terminal 10 may operate according to the dual mode settings. The first and second SIM cards 27 and 29 may be displayed with their assigned titles and icons assigned on the dual mode setting screen 59.

If a "save" button provided at the dual mode setting screen is selected after completion of the dual mode setting, the control unit 11 saves the dual mode settings configured in association with the first and second SIM cards 27 and 29 in the storage unit 21. At this time, the control unit 11 maps the IMSI information of the first SIM card 27 to the SIM indicative information, i.e. the title "HOME" and the icon assigned to the first SIM card 27, and saves the mapping information. The control unit 11 also maps the IMSI information of the second SIM card 29 to the title "OFFICE" and icon assigned second SIM card 29 and saves the mapping information.

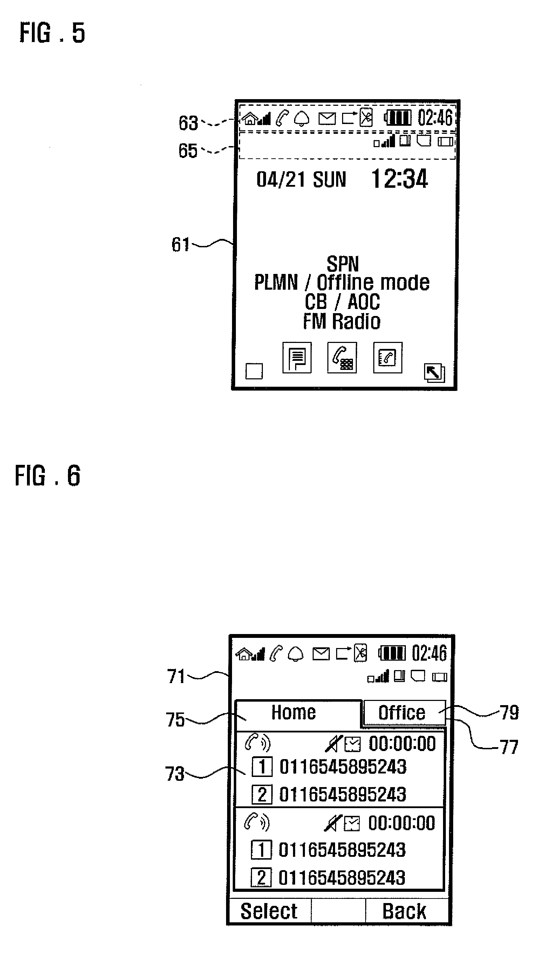

FIG. 5 is a diagram showing a standby screen of a mobile terminal operating with the SIM indicative information display method of FIG. 2A and FIG. 2B.

Once the first and second SIM cards 27 and 29 are successfully registered to the mobile terminal 10, the mobile terminal 10 enters a standby mode with the standby mode screen 61. As shown in FIG. 5, the standby mode screen 61 is provided with two indicator lines 63 and 65.

The first indicator line 63 is provided with a plurality of icons indicating the operation status of the mobile terminal 10 with the primary SIM card, and the second indicator line 65 is provided with is a plurality of icons indicating the operation status of the mobile terminal with the secondary SIM card.

The first indicator line 63 may display two Received Signal Strength Indicator (RSSI) icons responsible for a Wireless Application Protocol (WAP) and a cellular communication even when the second indicator line 65 is disabled. The control unit 11 detects whether a SIM indicative information request is received.

FIG. 6 is a diagram showing a call history screen of the mobile terminal according to an exemplary embodiment of the present invention.

Referring to FIG. 6, the call history screen 71 is provided with two call history windows 73 and 77 associated with the first and second SIM cards 27 and 29. The first call history window 73 is represented by a tab 75 entitled "HOME" assigned to the first SIM card 27, and the second call history window 77 is represented by a tab 79 entitled "OFFICE" assigned to the second SIM card 29. The user may distinguish the first and second SIM cards 27 and 29 from each other with reference to the titles "HOME" and "OFFICE". The first and second call history windows 73 and 77 may be switched by selecting a window switch key.

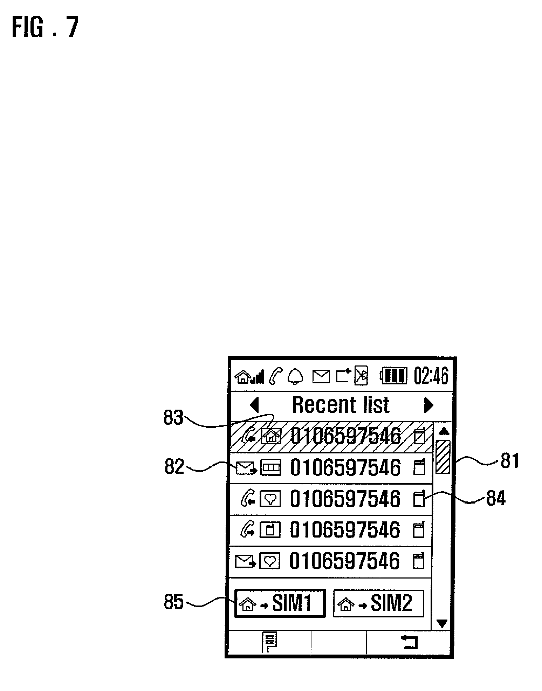

FIG. 7 is a diagram showing a recent list screen of the mobile terminal according to an exemplary embodiment of the present invention.

If a call request command is input while mobile terminal is in a standby mode, the control unit 11 causes a recent list screen to be displayed, as shown in FIG. 7. Each item listed on the recent screen is provided with a call type icon 82 indicating the type of the call (e.g., incoming call, outgoing call, received message, or sent message), a SIM card information icon 83 indicating the SIM card associated with the call, and a group icon 84 indicating the group to which the phone number belongs in the phonebook. The user may check which SIM card 27 or 29 is used in association with each call with reference to the SIM card information icon 83. Also, the recent list screen may be provided with soft key buttons 85 at the bottom of the screen. Each soft key button 85 may be provided with the SIM card information icon 83 and a physical location name indicating the physical locations of the SIM card.

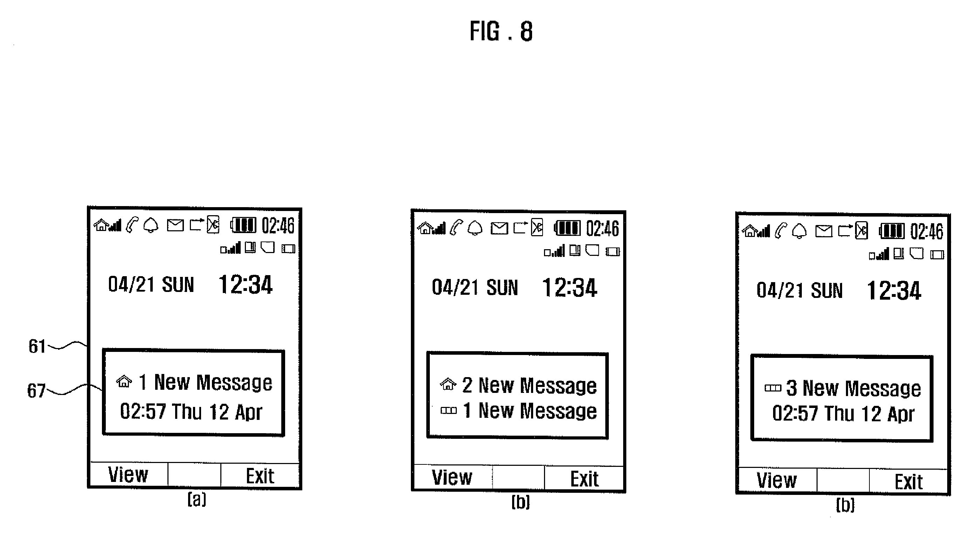

FIG. 8 is a diagram showing steps of an incoming call alert procedure of the mobile terminal according to an exemplary embodiment of the present invention.

Referring to FIG. 8, if a text message is received while the mobile terminal is in the standby mode, the control unit 11 causes an incoming call alert 67 to be displayed on the standby mode screen 61 in the form of a popup window. The screen image (a) of FIG. 8 shows an incoming call alert 67 indicating that one new message has been received using the first SIM card 27, the screen image (b) of FIG. 8 shows an incoming call alert 67 indicating that two new messages have been received using the first SIM card 27 and 1 new message has been received using the second SIM card 29, and the screen image (c) of FIG. 8 shows an incoming call alert 67 indicating that three new messages have been received using the second SIM card 29. The user may check which SIM card 27 or 29 was used to receive the messages with reference to the SIM card icons presented with the incoming call alert 67.

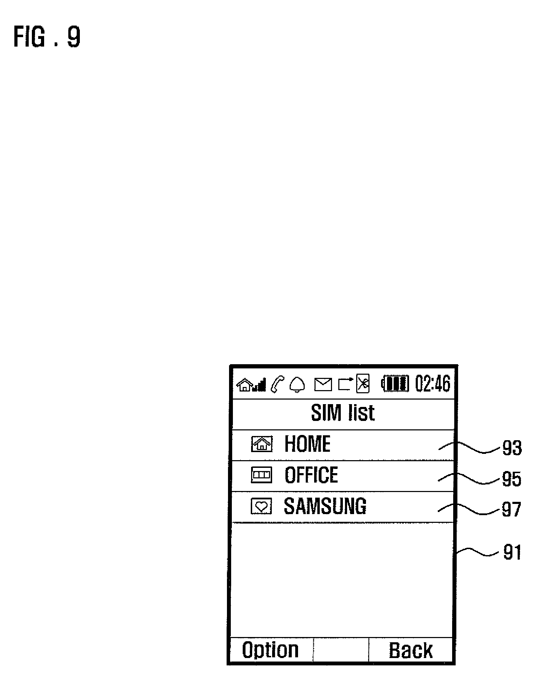

FIG. 9 is a diagram showing a SIM card list screen of the mobile terminal according to an exemplary embodiment of the present invention.

If a SIM card list request command is input, the control unit 11 causes a SIM card list screen 91 to be displayed, as shown in FIG. 9. The SIM card list lists SIM card information composed of a SIM card icon and a SIM card title. The SIM card list shows SIM card information of currently installed SIM cards 93 and 95 and of a SIM card 97 that is registered but not installed.

Although the SIM card registration is performed during the booting process of the mobile terminal in the above exemplary embodiments, the present invention is not limited thereto. For example, mobile terminal may be configured such that, when the primary SIM card is reset or a new SIM card is installed, the SIM card registration screen is provided to register the SIM indicative information. The SIM indicative information request may be any of a call history request (total call time and communication cost), a phonebook request, an incoming message arrival, the sending of an outgoing message, a ring tone setting, a network service, and a security related request.

As described above, the mobile terminal and SIM indicative information display method thereof allows a user to register SIM indicative information in association with individual SIM cards so that the SIM indicative information is displayed in response to a SIM card information request, whereby the user may distinguish the currently installed SIM cards from each other and intuitively check the utilization of the SIM cards in association with various menus.

Also, the mobile terminal and SIM indicative information display method thereof may allow the user to set the SIM indicative information of different SIM cards, whereby it may be possible to assign user-friendly indicative information to the SIM cards, resulting in improved usability of the multi-SIM mobile terminal. Since the SIM cards used with the mobile terminal are registered to a SIM card list, it may be possible to manage multiple SIM cards.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method of displaying subscriber identity module (SIM) indicative information for a mobile terminal having multiple SIM card slots (23, 25) to receive SIM cards (27, 29), comprising:
receiving SIM indicative information of a SIM card (27, 29) detected in one of the SIM card slots (23, 25);
detecting a SIM indicative information request requesting the SIM indicative information of the SIM card (27, 29); and
displaying the SIM indicative information mapped to a SIM identity of the SIM card (27, 29) when the SIM indicative information request is detected.

2. The method of any of proceeding claims, wherein registering the SIM indicative information comprises:
inspecting the SIM cards to determine if it is registered;
displaying a SIM registration screen to register the SIM card if the SIM card is unregistered; and
registering the SIM card by saving SIM indicative information of the unregistered SIM on the SIM registration screen with the identity of the SIM card.

3. The method of claim 1, wherein the SIM identity is International Mobile Station Identification (IMSI) stored in the at least one SIM card.

4. The method of any of proceeding claims, wherein the SIM indicative information comprises a title and an icon assigned to the SIM card.

5. The method of claim 2, wherein inspecting the SIM card is performed while the mobile terminal boots up.

6. The method of claim 2, wherein displaying a SIM registration screen comprises displaying default SIM indicative information.

7. The method of claim 2, wherein registering the SIM card comprises:
receiving a title of the SIM card in a text box on the SIM registration screen; and
selecting one of a plurality of icons to be assigned to the SIM card.

8. The method of claim 7, wherein the SIM registration screen further comprises physical location of the SIM card in the mobile terminal.

9. The method of any of claims 1 to 4,wherein displaying the SIM indicative information comprises displaying a SIM card list that lists registered SIM cards.

10. The method of claim 9, wherein displaying a SIM card list comprises:
determining whether an information editing request for a specific registered SIM card is detected; and
editing the SIM indicative information of the specific registered SIM card when an information editing request is detected.

11. The method of any of claims 1 to 4, wherein the SIM indicative information request is one of a call log request, a phonebook request, a text message arrival, a ring tone setting request, a network service selection request, and a security related request.

12. The method of claim 4, wherein displaying the SIM indicative information comprises displaying tabbed windows having titles of individual SIM cards.

13. The method of any of claims 1 to 4, wherein displaying the SIM indicative information comprises displaying icons assigned to the individual SIM cards with the titles of the individual SIM cards.

14. The method of any of claims 1 to 4, wherein displaying the SIM indicative information comprises displaying the SIM indicative information of the SIM card in the form of an indicator line on an idle mode screen of the mobile terminal.

15. A mobile terminal (10), comprising:
a plurality of subscriber identity module (SIM) card slots (23, 25) to receive SIM cards (27, 29)
an input unit (17) to input SIM indicative information of a SIM card (27, 29) installed in one of the SIM card slots (23, 25);
a storage unit (21) to store mapping information of the SIM indicative information and a SIM identity stored in the corresponding SIM card (27, 29);
a display unit (19) to display the SIM indicative information mapped to the SIM identity of the SIM card (27,29); and
a control unit (11) to control the storage unit (21) to store the SIM indicative information and mapping information between the SIM indicative information and the SIM identity and to control the display unit (19) to display the SIM indicative information mapped to the SIM identity of the SIM card (27, 29) in response to a SIM indicative information request.
